# EUROPEAN PATENT APPLICATION

(11) **EP 1 726 941 A2**
(43) Date of publication of application: **29.11.2006**
(21) Application number: 06010072.4
(22) Date of filing: 16.05.2006
(51) Int. Cl.: G01N 21/64, G01N 15/14

(54) **Method for inspecting the quality of probe beads**

(30) Priority: 25.05.2005 JP 2005152254
(71) Applicant: HITACHI SOFTWARE ENGINEERING CO., LTD., Yokohama-shi, Kanagawa 230-0045 (JP)
(72) Inventor: Kogi, Osamu, c/o Hitachi Software Engineering Co., Tokyo 140-0002 (JP); Ban, Noriko, c/o Hitachi Software Engineering Co., Tokyo 140-0002 (JP)
(74) Representative: Liesegang, Roland

(57) **Abstract**

In capillary bead arrays, the quality of each of a number of probe beads made by the batch process is non-destructively inspected. Only good probe beads, which are beads having a predetermined quantity of probes of a desired type immobilized on the surface thereof, are selected to be arranged in capillaries, whereby homogeneous and high-quality capillary bead arrays alone can be provided to users. Thus, the reproducibility of biochemical experiments involving capillary bead arrays is significantly increased. Probe beads 401 made by the batch process are one- or two-dimensionally arranged on the bottom surface of a container 402. The probe beads 401 are irradiated with excitation light 403, and the quality of the probe beads 401 arranged on the bottom surface of the container 402 is inspected by spectral analysis. Based on the quality inspection, probe beads judged as defective items are removed from all the probe beads 401, thereby leaving only probe beads judged as good items. The remaining good probe beads alone in the container 402 are provided in capillary bead arrays.

## Description

### BACKGROUND OF THE INVENTION

### Field of the Invention

The present invention relates to capillary bead arrays in which probe beads are arranged in a capillary formed in a soft resin or the like. In particular, it relates to a method for rapidly and non-destructively inspecting the quality of a number of probe beads made by a batch process.

### BACKGROUND ART

JP Patent Publication (Kokai) No. 2000-346842 A discloses a conventional technology regarding a capillary bead array having capillaries formed in a soft resin or the like. In such capillaries, probe beads are arranged that have immobilized thereon probe molecules for detecting biologically relevant target molecules such as nucleic acids or proteins. It is stated in Patent Document 1 that, for the practical application of probe chips having probe molecules, such as DNA, immobilized on a solid surface, it is important that it be possible a large variety of chips to be made in small amounts at low cost, and for probe molecules to be immobilized with a high degree of uniformly, for example. In order to achieve these goals, JP Patent Publication (Kokai) No. 2000-346842 A discloses that "immobilization of probes on a solid surface and arrangement of such probes are carried out in separate steps. In this way, DNA probes can be uniformly produced on the solid surface." Specifically, it discloses that "fine particles are used as the solid on which probes are immobilized and are arranged to produce a probe array having segments of a suitable size." Thus, in accordance with the method disclosed in Patent Document 1, it is necessary to make probe beads having probe molecules such as DNA immobilized on the surface of fine particles via covalent bonds.

With regard to the capillary bead array disclosed in JP Patent Publication (Kokai) No. 2000-346842 A , a conventional method for making probe beads is the so-called batch process. In the batch process, a reaction container is loaded with necessary ingredients all at once, including beads as a solid substrate, probe molecules, and all the reagents involved in the chemical reaction for immobilizing the probe molecules onto the surface of the beads. The ingredients are reacted and, after the probe immobilization reaction achieves equilibrium or after a certain rate of reaction is reached, the reaction products, namely, probe beads, are collected. The manufacture of probe beads by the batch process has the significant advantage that it allows homogeneous probe beads to be easily made. This is because a number of beads undergo reaction at once in a reaction container. However, even the batch process does not absolutely assure the production of uniform probe beads. The only way to check whether or not uniform probe beads have actually been achieved by the batch process is to individually inspect the quality of all the resulting probe beads. JP Patent Publication (Kokai) No. 2000-346842 A does not disclose a method for inspecting the quality of a number of probe beads that have undergone the batch process with regard to capillary bead arrays.

### SUMMARY OF THE INVENTION

As described above, in capillary bead arrays, a large number of probe beads having probe molecules immobilized on the surface of beads are made at once by the batch process. The probe beads thus made are arranged in capillaries so as to make a capillary bead array. In order to increase the reproducibility of biochemical experiments that involve capillary bead arrays, all the capillary bead arrays need to be homogeneous. Namely, all the probe beads arranged in capillaries need to be homogeneous and of high quality.

High-quality, good probe beads in capillary bead arrays meet the following two conditions:
(1) The sphericity and the spherical diameter of the beads meet their reference values.
(2) Probes are uniformly immobilized on the surface of the beads, and the quantity of immobilized probes meets its reference value.

While the batch process is a very good process for making uniform, high-quality, and good probe beads, it does not absolutely guarantee the production of good probe beads. Although the only way to check the quality of probe beads is to inspect the quality of each of a number of probe beads, the number of probe beads made for capillary bead arrays is enormous. Good probe beads are arranged in capillaries to be provided for biochemical experiments that involve capillary bead arrays.

Thus, in order to provide users with homogeneous, high-quality capillary bead arrays, a method is required that enables rapid and non-destructive quality inspection of each of a number of probe beads made by the batch process. Since JP Patent Publication (Kokai) No. 2000-346842 A does not disclose a method for inspecting the quality of probe beads, there has been a demand for the development of an effective quality inspection method for probe beads.

As a result of intensive studies, the present inventors have found out that the above problems can be solved by inspecting the quality of the probe beads by non-destructively analyzing each of the probe beads made by the batch process using spectral analysis, either before or after arranging them in a capillary.

The invention characteristically employs spectral analysis for non-destructively inspecting the quality of each of the probe beads. A prerequisite for a probe bead in a capillary bead array is that a predetermined quantity of probe is immobilized on the surface of the bead. Namely, in order to inspect the quality of the probe bead, it is only necessary to measure the quantity of the probe immobilized on the surface of the bead. This can be viewed as a type of quantitative analysis of molecules that are covalently bound to the surface of a solid substrate. The conditions for quality inspection of probe beads are as follows:
(1) Objects to be inspected are micrometer-size fine beads.
(2) Probe beads need to be inspected while suspended in a buffer solution in order to maintain the conformation and physiological activity of the probes.
(3) Not only a part of the surface of the probe beads, but also the entire surface of the probe beads needs to be inspected.
(4) All of a number of beads need to be rapidly measured.
(5) Inspection needs to be non-destructive because probe beads judged to be good probe beads are directly arranged in a capillary.

Examples of the spectral analysis for quantitatively analyzing the molecules that have become absorbed on or chemically bound to the surface of a solid substrate include ellipsometry, reflection infrared spectroscopy, X-ray photoelectron spectroscopy, atomic force microscopy, and mass spectrometry. However, it is difficult to meet all the foregoing conditions for quality inspection of probe beads by any of the methods described above. For example, it would be difficult to analyze probe beads suspended in a buffer solution with reflection infrared spectroscopy because water molecules themselves, which are the main component of the buffer solution in which the probe beads are suspended, have a strong absorption.

The invention utilizes fluorescence spectroscopy and Raman spectroscopy as a method that meets all the foregoing conditions for quality inspection of probe beads.

Fluorescence spectroscopy is a method that enables a non-destructive analysis of probe beads suspended in a buffer solution. When probes have fluorescence, the fluorescence of the probes themselves immobilized on the surface of probe beads is analyzed, so as to inspect the quality of the probe beads. When probes do not have fluorescence, labeled molecules that can specifically bind to the probes and that have fluorescence are caused to be bound to the probes, and the fluorescence of the labeled molecules is analyzed, whereby the probes are indirectly analyzed and the quality of the probe beads is inspected. In this case, after completion of the quality inspection of the probe beads, the probe beads may be restored to the state they were in before the quality inspection thereof by dissociating the labeled molecules bound to the probes. Thus, the probe beads can be non-destructively inspected.

Raman spectroscopy is also a spectral analysis that enables the measurement of the type and quantity of biologically relevant molecules on the surface of a solid substrate. Particularly, information about molecular vibration can be obtained by Raman spectroscopy, making it possible to conduct in-depth discussions about biologically relevant molecules on the surface of a solid substrate, including their molecular structures. In Raman spectroscopy, because Raman absorption due to water molecules is weak, it is suitable for analyzing biologically relevant molecules in aqueous solution. Raman spectroscopy has the following characteristics:
(1) Extremely small amounts of sample can be analyzed. Generally, amounts of sample on the order of several µl (microliters) in the case of liquids and several ng (nanograms) in the case of solids can be analyzed.
(2) Analysis can be non-destructively conducted, regardless of the state (gas, liquid, or solid) or the shape (crystalline, fibrous, filmy, or the like) of the substance.
(3) Aqueous solution or suspension can be analyzed.
(4) A sample in a transparent container of glass or the like can be directly analyzed.

In accordance with the invention, in a capillary bead array, a number of probe beads made by the batch process can be rapidly and non-destructively inspected one by one by spectral analysis. By inspecting the state of bonding (the quality of probe beads) between the beads and the probes of probe beads before they are arranged in a capillary, defective probe beads can be removed in advance and good probe beads alone can be arranged in the capillary. By inspecting the quality of probe beads after they are arranged in a capillary, capillary bead arrays in which defective probe beads are arranged can be removed as defective items. Thus, in accordance with the invention, defective capillary bead arrays can be detected and removed, so that users can be provided with high-quality capillary bead arrays only. Consequently, reproducibility of biochemical experiments that involve capillary bead arrays is significantly increased, thereby significantly increasing the value added for users.

### BRIEF DESCRIPTION OF THE DRAWINGS

Fig. 1 shows a conceptual diagram of a method for inspecting the quality of probe beads by fluorescence analysis when probes have fluorescence.
Fig. 2 shows a conceptual diagram of a method for inspecting the quality of probe beads by fluorescence analysis with the use of labeled molecules that specifically bind to probes and that have fluorescence, when the probes do not have fluorescence.
Fig. 3 shows a conceptual diagram of a method for inspecting the quality of probe beads by Raman spectroscopy.
Fig. 4 shows a conceptual diagram of a method whereby a number of probe beads made by the batch process are one- or two-dimensionally arranged and the quality of each probe bead is inspected by spectral analysis.
Fig. 5 shows a conceptual diagram of a method whereby the quality of probe beads made by the batch process is individually inspected by spectral analysis in order to separate good probe beads from defective prove beads, based on the principle of a flow cytometer.
Fig. 6 shows a conceptual diagram of a method for inspecting the quality of probe beads in which probe beads made by the batch process are arranged in a capillary formed in a soft resin or the like, wherein the probe beads arranged within the capillary are subjected to spectral analysis from the outside the capillary.

### DESCRIPTION OF PREFERRED EMBODIMENTS OF THE INVENTION

In the invention, beads are made of plastic, glass, or the like, and they are spherical in shape, having a particle diameter between several pm and several dozen µm. Examples include polystyrene beads, polypropylene beads, and magnetic beads. Probe beads are composed of probes, such as nucleic acids or proteins, immobilized on the surface of the beads by covalent bond.

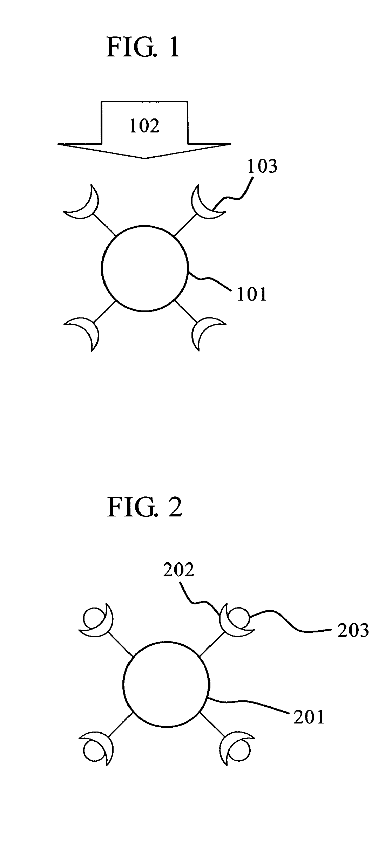

Fig. 1 shows a conceptual diagram of a method for inspecting the quality of probe beads by fluorescence analysis when probes have fluorescence. A probe bead 101 is entirely irradiated with excitation light 102 so as to optically excite all probes 103 on the surface of the probe bead 101. The wavelength of the excitation light 102 is suitably selected in accordance with the type of the probes 103. The optically excited probes 103 emit fluorescence. The type and quantity of the probes 103 that exist on the surface of the probe bead 101 are inspected based on the shape of fluorescence spectrum or the intensity of fluorescence emitted by the probes 103. The probe bead 101 that is confirmed to have a predetermined quantity of probes 103 of a desired type immobilized thereon is determined to be a good probe bead. The probe bead 101 that is not confirmed to have a predetermined quantity of probes 103 of a desired type immobilized thereon is determined to be a defective probe.

Fig. 2 shows a conceptual diagram of a method for inspecting the quality of probe beads by fluorescence analysis with the use of labeled molecules that specifically bind to probes and that have fluorescence, when the probes do not have fluorescence. Labeled molecules 203 that specifically and quantitatively bind to probes 202 immobilized on the surface of a probe bead 201 and that have fluorescence are caused to be bound to the probes 202. By subjecting the labeled molecules 203 bound to the probes 202 immobilized on the surface of the probe bead 201 to fluorescence analysis, the quality of the probe bead 201 in terms of the type and quantity of the probes 202 that exist on the surface of the probe bead 201 is indirectly inspected. After completion of the quality inspection of the probe bead 201, if the labeled molecules 203 are unnecessary, the labeled molecules 203 bound to the probes 202 immobilized on the surface of the probe bead 201 are caused to be dissociated from the probes 202.

Methods for dissociating the labeled molecules 203 bound to probes 202 include the following:
(1) A physical property, such as the pH or the ionic strength of a solvent, is changed such that the interaction between the probes 202 and the labeled molecules 203 is weakened for dissociation.
(2) The chemical bond between the probes 202 and the labeled molecules 203 is cut with the use of a reagent such as enzyme.

After completion of the quality inspection of the probe bead 201, the labeled molecules 203 bound to the probes 202 immobilized on the surface of the probe bead 201 are caused to be dissociated, so as to restore the probe bead 201 to the state they were in before the quality inspection. Thus, the quality of probe beads can be non-destructively inspected by fluorescence analysis.

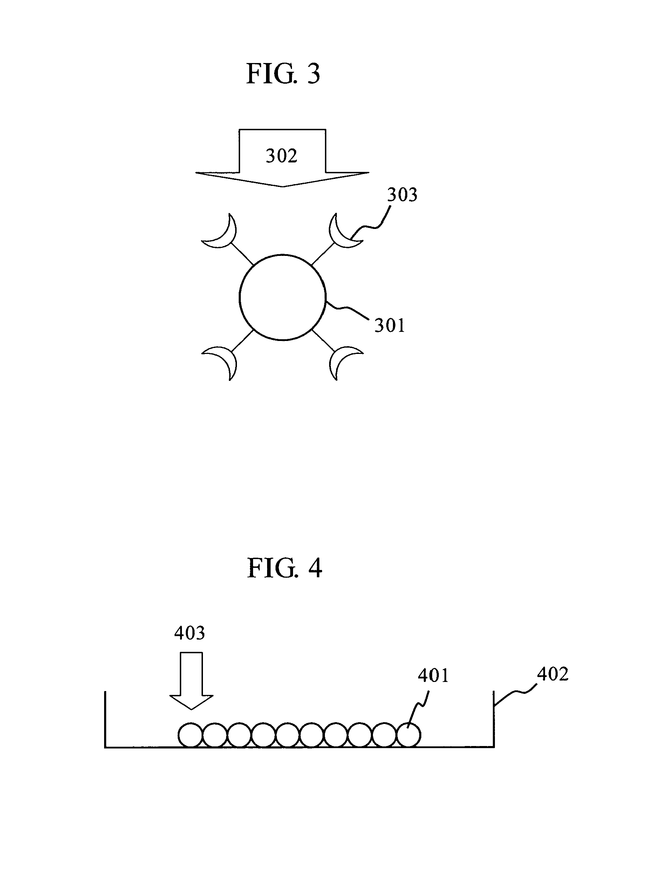

Fig. 3 shows a conceptual diagram of a method for inspecting the quality of probe beads by Raman spectroscopy. A probe bead 301 is entirely irradiated with excitation light 302 so as to optically excite all probes 303 on the surface of the probe bead 301. The wavelength of the excitation light 302 is suitably selected in accordance with the type of probes 303. The optically excited probes 303 emit Raman scattered light. Based on the shape of Raman scattering spectrum or the intensity of scattered light produced by the probes 303, the quality of the probe bead 301 in terms of the type and quantity of the probes 303 on the surface of the probe bead 301 is inspected. The probe bead 301 that is confirmed to have a predetermined quantity of probes 303 of a desired type immobilized thereon is determined to be a good probe bead. The probe bead 301 that is not confirmed to have a predetermined quantity of probes 303 of a desired type immobilized thereon is determined to be a defective probe.

Fig. 4 shows a conceptual diagram of a method whereby a number of probe beads made by the batch process are one- or two-dimensionally arranged and the quality of each probe bead is inspected by spectral analysis. Probe beads 401 made by the batch process are one- or two-dimensionally arranged on the bottom surface of a container 402. The probe beads 401 are irradiated with excitation light 403 so as to inspect the quality thereof arranged on the bottom surface of the container 402 by spectral analysis. At this point, the quality of the probe beads 401 may be individually inspected by one- or two-dimensionally sweeping the excitation light 403. Alternatively, the quality of several probe beads 401 may be inspected at once by expanding the irradiation area of the excitation light 403.

Probe beads judged to be defective items are removed from all the probe beads 401, thereby leaving only the probe beads judged to be good items. Examples of methods for selectively removing only defective probe beads from all probe beads 401 include a method involving the use of minute air tweezers and a method involving the use of optical tweezers that employ laser light. Defective probe beads are removed from all the probe beads 401, so as to provide only the remaining good probe beads in the container 402 to capillary bead arrays.

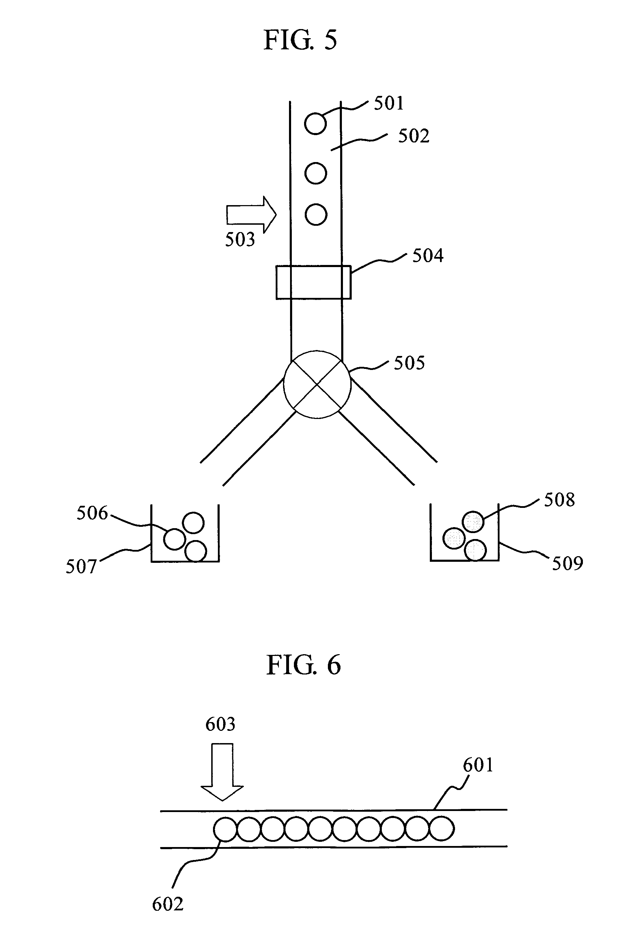

Fig. 5 shows a conceptual diagram of a method whereby the quality of probe beads made by the batch process is individually inspected by spectral analysis in order to separate good probe beads from defective prove beads, based on the principle of a flow cytometer. Probe beads 501 are introduced into the flow cytometer, and they are caused to flow into a flow cell 502 of the flow cytometer one by one. The probe bead 501 is then irradiated with excitation light 503 and subjected to quality inspection by spectral analysis. A detector 504 is installed downstream of the flow cell 502, and the result of the quality inspection of the probe bead 501 is detected as an electrical signal. The flow cell 502 is branched off downstream, and the branched flow passages can be switched by a valve 505. If, as a result of the quality inspection, the probe bead 501 is judged to be a good probe bead, an electrical signal is detected by the detector, the valve 505 is switched, and the good probe bead 506 is caused to flow into a good probe bead collecting container 507 where it is collected. In contrast, if, as a result of the quality inspection, the probe bead 501 is judged to be a defective probe bead 508, an electrical signal is detected by the detector 504, the valve 505 is switched, and the defective probe bead 508 is caused to flow into a defective probe bead collecting container 509 where it is collected. Good probe beads 506 alone that are collected in the good probe bead collecting container 507 are provided as probe beads for capillary bead arrays.

Fig. 6 shows a conceptual diagram of a method for inspecting the quality of probe beads in which, after probe beads made by the batch process are arranged in a capillary formed in a soft resin or the like, spectral analysis is performed on the probe beads arranged in the capillary from the outside the capillary. Probe beads 602 are arranged in a capillary 601. The probe beads 602 arranged inside the capillary 601 are irradiated with excitation light 603 from the outside the capillary 601, so as to inspect the quality of the probe beads 602 by spectral analysis. In capillary bead arrays, defective probe beads must not be present in capillaries. Therefore, even if only a single defective probe bead is found by the quality inspection of a capillary bead array, the capillary bead array containing the defective probe bead is viewed as a defective item not to be provided to users.

### INDUSTRIAL APPLICABILITY

In capillary bead arrays, chemical reactions between probe beads arranged in a capillary and target molecules contained in a test sample are detected. In order to increase the reproducibility of biochemical experiments that involve capillary bead arrays, the probe beads arranged in a capillary need to be homogeneous and of high quality. Therefore, the quality of all the probe beads made by the batch process needs to be inspected so as to provide only good probe beads that meet a predetermined standard for quality for capillary bead arrays.

In accordance with the invention, each of a number of probe beads made by the batch process can be rapidly and non-destructively inspected by spectral analysis. When the quality of probe beads is inspected before they are arranged in capillaries, defective probe beads can be removed in advance and good probe beads alone can be arranged in the capillaries. When the quality of probe beads is inspected after they are arranged in capillaries, capillary bead arrays in which defective probe beads are arranged can be removed as defective items.

In accordance with the invention, defective capillary bead arrays can be detected and removed, thereby providing users with homogeneous and high-quality capillary bead arrays only. Reproducibility of biochemical experiments that involve capillary bead arrays can be significantly increased, thereby significantly increasing the value added for users.

## Claims

1. A method for individually inspecting the quality of probe beads in a capillary bead array, said capillary bead array having a number of probe beads arranged one- or two-dimensionally in a capillary formed on a substrate, said probe beads having probe molecules having the property to trap target molecules bound to the surface thereof, said method comprising inspecting the state of bonding between the bead and probe of a number of probe beads made at once by a batch process individually by spectral analysis.

2. The method for inspecting the quality of probe beads in a capillary bead array according to claim 1, said method comprising inspecting the state of bonding between the bead and probe of a number of probe beads made at once by the batch process by spectral analysis outside the capillary before the probe beads are arranged in the capillary.

3. The method for inspecting the quality of probe beads in a capillary bead array according to claim 2, comprising:
inspecting the state of bonding between the bead and probe of a number of probe beads outside the capillary;
judging probe beads to be good probe beads if they meet a predetermined standard for quality;
judging probe beads to be defective probe beads if they do not meet the predetermined standard for quality; and
separating good probe beads from defective probe beads.

4. The method for inspecting the quality of probe beads in a capillary bead array according to claim 1, said method comprising inspecting the quality of probe beads made at once by the batch process by arranging them in the capillary in a predetermined sequence and then performing spectral analysis on the probe beads in the capillary.

5. The method for inspecting the quality of probe beads in a capillary bead array according to any one of claims 1 to 4, wherein the spectral analysis is fluorescence spectroscopy.

6. The method for inspecting the quality of probe beads in a capillary bead array according to claim 5, wherein, when the probes immobilized on the surface of the bead have fluorescence by themselves, the quality of probe beads is inspected by subjecting the probes directly to fluorescent analysis.

7. The method for inspecting the quality of probe beads in a capillary bead array according to claim 5, wherein, when the probes immobilized on the surface of the bead do not have fluorescence, the quality of probe beads is inspected by causing a labeled molecule to be bound to the probes, the labeled molecule having the property to specifically and quantitatively bind to the probes and having fluorescence, and by indirectly analyzing the probes through fluorescence analysis of the labeled molecules.

8. The method for inspecting the quality of probe beads in a capillary bead array according to claim 7, said method comprising, after completion of the quality inspection of the probe beads having the labeled molecule bound to the probes immobilized on the surface thereof, causing the labeled molecule bound to the probes immobilized on the surface of the probe beads to be dissociated and removed from the probes, so as to restore the probe beads to the state they were in prior to the implementation of quality inspection.

9. The method for inspecting the quality of probe beads in a capillary bead array according to any one of claims 1 to 4, wherein the spectral analysis is Raman spectroscopy.

10. The method for inspecting the quality of probe beads in a capillary bead array according to any one of claims 1 to 9, wherein the spectral analysis is carried out in the liquid phase.

11. The method for inspecting the quality of probe beads in a capillary bead array according to claim 10, wherein the step of separating good probe beads from defective probe beads by individually inspecting the quality of probe beads made by the batch process by spectral analysis is carried out based on the principle of a flow cytometer.
